(19) Europäisches Patentamt

European Patent Office

Office européen des brevets

(11) EP 2 244 059 A1

(12) EUROPEAN PATENT APPLICATION

(43) Date of publication:
27.10.2010 Bulletin 2010/43

(51) Int Cl.:
*G01B 11/30* (2006.01)   *G01N 21/896* (2006.01)

(21) Application number: 09158660.2

(22) Date of filing: 23.04.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(71) Applicant: **Coty Prestige Lancaster Group GmbH**
**55116 Mainz (DE)**

(72) Inventors:
• **Pissavini, Marc**
**06000 Nice (FR)**

• **Ferrero, Louis**
**06300 Nice (FR)**
• **Doucet, Olivier**
**06230 Villefranche sur Mer (FR)**

(74) Representative: **Gulde Hengelhaupt Ziebig &**
**Schneider**
**Patentanwälte - Rechtsanwälte**
**Wallstrasse 58/59**
**10179 Berlin (DE)**

(54) **Method to control quality of UV transparent substrate plates suitable for in vitro determination of UV protection**

(57)    The present invention is directed to a method to control quality of UV transparent substrate plates, comprising the steps: a) providing UV transparent substrate plate; b) determining surface parameters for at least one roughened main surface of the UV transparent substrate plate, wherein the surface parameters determined comprise at least three surface parameters selected from Sv, Rv, St, Rt, Sdr, Rdr, Sdq, Rdq, Ssk, Rsk, SA1, A1, SA2, A2 and Vvv; c) use of determined values to generate one or more comparative values; d) determine compliance of one or more comparative values with a threshold value; and e) if a predetermined number of comparative values does not exceed a corresponding threshold value, the UV transparent substrate plate is designated as "pass".

EP 2 244 059 A1

**Description**

Field of the invention:

The present invention provides new methods to control quality of UV transparent substrate plates suitable for in vitro determination of UV protection.

Background of the invention:

Cosmetic industry has worked for decades on *in vitro* determination of sun burn protection (in terms of sun protection factors (SPFs)). In a first approach, it was intended to use these alternative methods only for internal screening tests. Recently, the European Commission recommended replacing *in vivo* by *in vitro* methods for claiming purposes, as long as they deliver equivalent results (Recommendation of the European Commission, September the 22nd 2006). Colipa (European Cosmetic, Toiletry, Perfumery Association) already proposed an inter-laboratory validated *in vitro* UVA method based on *in vitro* UV spectroscopy. Concerning the basic SPF index, intensive efforts are now spent in order to deliver a worldwide harmonised test method (ISO). Among the different parameters influencing the spectroscopic results, many are already identified, like the amount of product applied, the spreading process and the roughness Sa of the UV transparent substrate, the PMMA plate. However, very little Information can be found in the literature about the impact of the other surface parameters, expected being pertinent to better describe the surface microrelief of the substrate.

The *in vitro* tests are based on diffuse transmission spectroscopy as sunscreens are expected to prevent damage from the sun by absorbing harmful UV radiations at the skin surface. A thin product film is applied to a suitable UV transparent substrate (PMMA) plate, then UV radiation transmitted through this film is measured before or after irradiation by a spectrophotometer equipped with an integrating sphere.

Several authors have shown a more or less good correlation with results measured *in vivo* (Kelley K., Laskar P., J. Soc. Chem. (1993); Dutra E., Oliviera D., RBCF (2004*); or Bendova H., Alcrman J" Toxicology in vitro (2007)).

Inconsistent results have been attributed to a poor control of the parameters influencing the *in vitro* results. Some recent studies, however, showed that it was possible to obtain reproducible results which are in line with those obtained *in vivo,* if the validation of equipment used, the quantity of product spread out, as well as the quality of spreading were strictly controlled (Pissavini M., Alard V., Cosm. & Toil. (2003); U. Heinrich, D, Kockott, R. Int. J. Cosmet. Sei., (2004)).

It has been shown (Ferrero L, Pissavini M, Dehais A, Zastrow L.: Importance of Substrate Roughness for In Vitro Sun Protection assessment, IFSCC magazine, vol.9 (2), 2006) that the roughness of the substrate has a capital influence on the reproducibility, the repeatability and the accuracy of the measurements. However, among all those important criteria, those making roughness characterization of the support are not detailed enough until now. Indeed, the very recent method of *in vitro* determination of the protection UVA proposed by Colipa (Method for in vitro Determination of UVA protection, (2007) (colipa website)) or DIN 67502 only characterizes the support by its percentage of transmission at 290, 300 and 320 nm and by a basic roughness parameter, the arithmetic average of the surface roughness Sa.

It turned out that the surface roughness parameter Sa is not sufficient to exclude significant batch-to-batch variations of surface characteristics of the UV transparent substrate plates, which lead to substantial variations in the measured SPFs.

The problem to be solved by the present invention can be seen in the provision of methods that diminish, avoid or overcome one or more of the drawbacks of the state of the art.

Description of the invention:

The problem is solved by provision of a method to control quality of UV transparent substrate plates, comprising the steps:

   a) providing UV transparent substrate plate;
   b) determining surface parameters for at least one roughened main surface of the UV transparent substrate plate, wherein the surface parameters determined comprise at least three surface parameters selected from Sv, Rv, St, Rt, Sdr, Rdr, Sdq, Rdq, Ssk, Rsk, SA1, A1, SA2, A2 and Vvv;
   c) use of determined values to generate one or more comparative values;
   d) determine compliance of one or more comparative values with a threshold value; and
   e) if a predetermined number of comparative values does not exceed a corresponding threshold value, the UV transparent substrate plate is designated as "pass".

The method of the invention allows to easily and quickly control single UV transparent substrate plates for their surface characteristics and to select those UV transparent substrate plates suitable for use in a method of in vitro determination of SPFs provided by sunscreen products. The method of the invention allows to control batch-to-batch variations of UV transparent substrate plates and provides a decisive criteria for release of batches of UV transparent substrate plates for sale. Use of UV transparent substrate plates qualified by the method of the invention in a method of in vitro determination of SPFs provided by sunscreen products leads to less variations in the test results obtained (determined SPFs for sunscreen product) and further support the desired switch from in vivo to in vitro test methods for approval of sunscreen products.

The method of the invention is intended to control quality of UV transparent substrate plates, preferably of UV transparent substrate plates for use in a method of in vitro determination of UV protection provided by sunscreen products. The method of the invention can be used for validation of batches of UV transparent substrate plates and/or for to allow for statistical process control of the manufacturing process of UV transparent substrate plates.

The method of the invention to control quality of UV transparent substrate plates comprises at least the following steps.

The UV transparent substrate plate is UV-transparent, non-fluorescent (i.e. no detectable fluorescence when exposed under UV radiation and measured with the spectrophotometer), and photo-stable. In case the UV transparent substrate plate is intended for use in a method of in vitro determination of SPFs, the substrate plate should be inert towards all ingredients of the preparations to be applied to its surface for testing. Furthermore, to enable the application of stable thin films of different emulsion types in a skin-like manner, the substrate should have a textured upper surface.

Preferably the UV transparent substrate plates may be PMMA plates (polymethylmethacrylate Plexiglas™). The two opposing surfaces with the largest surface area are called the main surface sides of the substrate plate. At least one of the main surface sides of the substrate plate is roughened, e.g. during production by moulding or later on by sandblasting.

The size of the substrate plate should be chosen such that one of the main surfaces of the substrate plate comprises an area of not less than 16 cm$^2$ and such that the surface roughness parameters are still reliably measurable over the whole surface area of the roughened side. UV transparent substrate plates of square shape are preferred.

Preferably, the UV transparent substrate plate is moulded and/or particle blasted. The plates can be roughened on one or both of the main surface sides by an industrial sandblasting procedure (e.g. by glass pearls, with average diameter of 90-150 $\mu$m, 30 cm, 6 bar) in a very standardised manner. Moulded PMMA plates are preferred for the reproducibility of the process compared to sandblasted plates.

The qualitative transmission spectrum of an emulsion, applied to the rough side of the plates, strongly depends on the degree of roughness and the properties of the base material. Furthermore the degree of roughness will affect the optical properties of the roughened material itself. The preferred substrate plates are characterized by a typical optical transmission pattern after treatment with a suitable solvent, preferably petrolatum or glycerine, and measuring transmission levels at different wavelengths in the range from 290 to 400nm. The characteristic transmission values are given below.

The mean optical transmission through the substrate material treated with a suitable solvent, preferably petrolatum or glycerine should be as follows (N=20):

| Wavelength range (nm) | Minimum transmission |
|---|---|
| 290 | 60 |
| 300 | 69 |
| 320 | 81 |

In the method of the invention, surface parameters are determined for at least one roughened main surface of the UV transparent substrate plate, wherein the surface parameters determined comprise at least three surface parameters selected from Sv, Rv, St, Rt, Sdr, Rdr, Sdq, Rdq, Ssk, Rsk, SA1, A1, SA2, A2 and Vvv. Optionally one or more further surface parameters may be determined in addition. Preferably these further surface parameters are selected from Sa, Ra, Sp, Rp, Sku, Rku, Sq, Rq, Vmp and/or Ssc.

In a preferred method of the invention, at least three surface parameters of a substrate plate are determined, one of which being Sa or Ra, the other selected from Sp, Rp, Sv, Rv, Sdq, Rdq, Ssk, Rsk, Sku, Rku, SA1, A1, SA2, A2, Ssc and/or Vvv.

Preferably 3, 4, 5, 6, 7, 8, 9,10 and/or 11 surface parameters are determined in the method of the invention.

More preferably the following set of surface parameters is determined: Ra, Rp, Rv, Rdq, Rsk, Rku, A1, A2, Ssc and Vvv.

In particular the following set of surface parameters is determined: Ra, Rv, Rdq, Rsk, A1, A2 and Vvv.

The surface parameters can be calculated based on surface analysis to give 3D parameters like e.g. Sa, Sp, St, Sv, Sdq, Ssk, Sku, SA1 and/or SA2. Alternatively these parameters can be calculated based on profile analysis to give 2D parameters like e.g. Ra, Rt, Rp, Rv, Rdq, Rsk, Rku, A1 and/or A2. For the purpose of the invention, the determination of 2D parameters is preferred over the determination of 3D parameters.

The parameters Sa/Ra, Sp/Rp, Sv/Rv, Sdq/Rdq, Ssk/Rsk, Sku/Rku, SA1/A1 and SA2/A2 are common ISO standard parameters for surface or profile description and can be determined and measured as described in detail in EUR 15178 EN and other DIN/ISO norms:

**ISO 3274:1997** Surface texture : profile method, nominal features of contact instruments.

**ISO 4287:1997** Surface texture : profile method, terms, definitions and surface texture parameters.

**ISO 4288:1996** Surface texture : profile method, rules and procedures for the surface texture assessment.

**ISO 11562:1997** Metrology characterization of filters with correct phase and of transmission bands to use in the contact profilometers.

**International standard ISO 13565** Calculation methods and parameters based on the linear material ratio curve.

Below, brief descriptions of the parameters mentioned above are provided:

Sa/Ra denotes the arithmetic mean deviation of the assessed profile from the average profile; the result is given in the length unit $\mu$m.

Sp/Rp denotes the maximum height of profile peaks within a sampling length; the result is given in the length unit $\mu$m.

St/Rt denotes the height between the highest peak and the deepest hole, the result is given in the length unit $\mu$m.

Sdr/Rdr denotes the developed interfacial area ratio in %, wherein this parameter indicates the complexity of the surface based on the comparison of the curvilinear surface and the support surface,a completely flat surface will have a Sdr/Rdr of 0%.

Sv/Rv denotes the maximum depth of profile valleys within a sampling length; the result is given in the length unit $\mu$m.

Sdq/Rdq denotes the root-mean-square (RMS) slope of the profile within a sampling length; the result is expressed in degrees.

Ssk/Rsk denotes the skewness or asymmetry of the assessed profile. If the surface is mainly composed of a shelf level and deep fine valleys, the skewness is below 0; if the surface is composed of a common surface level from which numerous peaks are extending upwards, the skewness is above 0. The result is expressed without any unit.

Sku/Rku denotes the kurtosis of the assessed profile. Rku characterizes the spreading of the distribution curve of the heights of the profile with regard to the average line. It is a measure of the "sharpness" of the surface profile. The result is expressed without any unit.

SA1/A1 denotes the upper area, i.e. the area of the restovers of the peaks extending above an average profile $\pm$ kernel and is given in $\mu$m$^2$/mm.

SA2/A2 denotes the lower area, i.e. the area of restovers of valleys extending below an average profile $\pm$ kernel and is given in $\mu$m$^2$/mm. A2 is a parameter that correlates with the volume of the oil reserve of a surface, the oil volume that the surface can store for lubrication.

Ssc denotes the arithmetic mean summit curvature of the surface. This parameter enables to know the mean form of peaks and valleys. They can be either more pointed = higher Ssc value, or either more rounded = lower Ssc value.

Vvv denotes the volume of void in the valleys, i.e. the volume of restovers of valleys extending below an average profile $\pm$ kernel and is given in ml/m$^2$.

Parameters describing the substrate plate surface roughness can be gained using micro topography measurements. The skilled reader is aware of means to determine the surface parameters mentioned above. In general, contact and/or non-contact systems are available to provide accurately the surface roughness parameters mentioned above (e.g., according to EUR 15178 EN). Non-contact systems are preferred, since these do not stress the surface of the test object. Preferred are spectroscopic and/or optical methods and systems. In a particularly preferred method of the invention, the surface parameters of at least one main surface of the UV transparent substrate plate are determined by optical high resolution surface detection means, like e.g. the topographic analyser ALTISURF 500 from Altimet®. The System is composed of an optical sensor, a motion controller, an x-y translation stage and a micro topography software Mountain Altimap module. The confocal optical sensor is based an a white light chromatic aberration principle which allows a high resolution: 10 nm vertical and 1 $\mu$m horizontal. The following conditions can be applied when measuring plate roughness of a surface area of 10mm x 5mm: interval measurement 15$\mu$m and scanning speed 100 steps/s. The surface parameters mentioned above can be calculated based on surface analysis (3D parameters: Sa, Sv, Sdq...) or based on profile analysis (2D parameters: Ra, Rv, Rdq ...). Although the calculations are different, both parameter types can be calculated from the same x-y scan data. Moreover, the corresponding 2D and 3D parameters have the same general meaning, each describing basically the same micro topographical aspect.

In the method of the invention, the surface parameters are determined for the main surface of the UV transparent substrate plate, which will receive test composition in a method of in vitro determination of SPFs provided by sunscreen products.

Use of values that have been determined for the selected surface parameters to generate one or more comparative values. The number of determined values does not necessarily equal the number of corresponding comparative values. According to the invention, it is possible to use each determined value to generate a corresponding comparative value. In this case the number of determined values equals the number of single corresponding comparative values. It is also within the scope of the invention that one or more determined values are integrated into one or more groups and that each of these groups is used to generate a common corresponding comparative value. In this case the number of determined values is higher than the number of corresponding comparative values and the number of groups equals the number of common corresponding values. It is also possible that all determined values are used to generate one single corresponding comparative value. In general the number of comparative values for a given set of determined values can be lower or higher or the same as the number of determined values in said set.

In general one or more determined values can be transformed into one or more comparative values by any means as long as the comparative value stands in reproducible and mathematically describable correlation to the underlying determined value(s). The comparative value can also be identical to the corresponding determined value. For the purpose of the present invention, it is mandatory that the determined values are transformed into comparative values in such a way that differences in two independently determined values of the same surface parameter are still detectable when comparing the corresponding comparative values.

Preferably one or more of the comparative values are z-scores or averages of z-scores of the corresponding determined values. The z-score or standard score indicates how many standard deviations an observation is above or below the mean. The z-score is calculated:

$$z = (x - m) / o \qquad ;$$

wherein

x = the determined value (or observed value)
m = the mean of the population of values for the respective surface parameter (also called target value)
o = the standard deviation of the population of values for said surface parameter.

At least one comparative value can be a global z-score. A global z-score is calculated in form of an average based on all individual z-scores according to one of the following equations:

$$\text{formula 1:} \qquad z_g = [\text{sum}(z_i^2)/r]^{1/2} \quad ;$$

or

$$\text{formula 2:} \qquad z_g = [\text{sum}(p_i z_i^2)/r]^{1/2} \; ;$$

wherein

$z_g$ = global z-score
$z_i$ = individual z-score
r = number of individual z-scores
$p_i$ = is a factor for each individual z-score that reflects the weight said individual z-score shall have in the global z-score, $p_i$ can have any value from 0 to 1.

Determination of compliance of one or more comparative values with a threshold value. After conversion of determined values into comparative value(s), the comparative value(s) are compared to a corresponding threshold value. The threshold value is a preset value that allows for a decision whether a particular comparative value deviates significantly from normal distribution and may impact overall quality of the UV transparent substrate plate tested. The threshold value may be the same for more than one and/or all comparative values. It is also possible that two or more or all comparative values are compared to different, individual threshold values. In particular in a setting where each surface parameter is reflected by a single comparative value, each of said comparative value can be compared to an individual threshold value or to a threshold value common to more than one or all comparative values. According to the present invention, it is also possible that compliance of one comparative value is determined with respect to more than one threshold value, preferably two threshold values, wherein a first threshold value is lower than a second threshold value.

It is assumed that the determined values for each of the surface parameters are distributed according to normal distribution. Thus, suitable threshold values can be derived from z-scores at a percentile rank which ensures that at least 90% of the normally distributed set will be included. The respective z-score corresponding to a given percentile rank is derivable from a conversion table for normally distributed data, see e.g. http://www.acposb.on.ca/conversion.htm. E.g. a threshold value of 1,3 equals a z-score at a percentile rank of 90.3%, a threshold value of 1,65 equals a z-score at a percentile rank of 95%, a threshold value of 1,96 equals a z-score at a percentile rank of 97,4%, a threshold value of 2,80 equals a z-score at a percentile rank of 99,7% and a threshold value of 3,09 equals a z-score at a percentile rank of 99,95%.

One, more than one or all threshold values can be selected to be $\geq$ 1,3; $\geq$ 1,65; $\geq$ 1,96; $\geq$ 2,80 or $\geq$ 3,09, preferably $\geq$ 1,96; $\geq$ 2,80 or $\geq$ 3,09, most preferably $\geq$ 1,96 or $\geq$ 3,09.

If at least one comparative value is a z-score, preferably at least one threshold value is selected to be $\geq$ 1,3; $\geq$ 1,65; $\geq$ 1,96; $\geq$ 2,80 or $\geq$ 3,09.

If all comparative values are z-scores and/or a global z-score, the threshold value is preferably the same for all comparative values and is selected to be $\geq$ 1,3; $\geq$ 1,65; $\geq$ 1,96; $\geq$ 2,80 or $\geq$ 3,09.

One comparative value may be compared for compliance with more than one threshold value, wherein a first threshold value represents a warning limit and a second threshold value represents a control limit.

The warning limit threshold value is selected such that if a predetermined number of the comparative values does not exceed the warning limit threshold value, a UV transparent substrate plate can be qualified as "pass". If at least one of the comparative values is a z-score, the warning limit threshold value is selected to be $\geq$ 1,65 or $\geq$ 1,96, preferably $\geq$ 1,96.

The control limit threshold value is selected such that if at least one comparative value exceeds the control limit threshold value, the UV transparent plate is no longer designated as "pass". If at least one of the comparative values is a z-score, the control limit threshold value is selected to be $\geq$ 1,96, $\geq$ 2,80 or $\geq$ 3,09, preferably $\geq$ 2,80 or $\geq$ 3,09. In any case the control limit threshold value is higher than the corresponding warning limit threshold value.

After compliance of comparative values with threshold values has been checked, the UV transparent substrate plate is designated as "pass", if a predetermined number of comparative values does not exceed a corresponding threshold value. Said predetermined number can be selected to be not less than 1/3rd of the total number of comparative values, preferably the predetermined number does not exceed the number of comparative values and is selected to be 1, 2, 3, 4, 5, 6, 7, 8, 9,10, 11 or 12.

The designation "pass" means that the UV transparent substrate plate does not differ significantly from the desired plate with regard to the determined roughness parameters. UV transparent substrate plates that are designated as "pass" are particularly suitable to be used in methods for determination of SPFs. Use of such plates yield in less variability in SPFs determination.

In a preferred method of the invention the determined values are used to generate corresponding single z-scores and a global z-score of all single z-scores; the compliance of single z-scores and/or the global z-score with a threshold value is determined; and if the global z-score and/or a predetermined number of single z-scores does not exceed a corresponding threshold value, the UV transparent substrate plate is designated as "pass". More preferably a global z-score is calculated from all individual z-scores and only compliance of the global z-score with a threshold value is determined and if the global z-score does not exceed the corresponding threshold value, the UV transparent plate is designated as "pass".

In another preferred method of the invention the determined values are used to generate corresponding single z-scores and/or a global z-score of all single z-scores; compliance of single z-scores and/or the global z-score with two threshold values, a warning limit threshold value and a control limit threshold value, is determined; and:

> i) if the global z-score and/or a predetermined number of the single z-scores do not exceed the warning limit threshold value, the UV transparent substrate plate is designated as "pass";
> ii) if the global z-score and/or at least one of the single z-scores exceeds the control limit threshold value, the UV transparent substrate plate is no longer designated as "pass"; and
> iii) if one or more than a predetermined number of the single z-scores exceed the warning limit threshold value, an alarm is launched in order to allow for control of manufacturing process of UV transparent substrate plate.

Said predetermined number can be selected to be not less than 1/3$^{rd}$ of the total number of comparative values, preferably the predetermined number does not exceed the number of comparative values and is selected to be 1, 2, 3, 4, 5, 6, 7, 8, 9, 10, 11 or 12.

Preferably the warning limit threshold value is lower than the control limit threshold value and wherein both, the warning limit threshold value and the control limit threshold value, are independently selected to be $\geq 1,65$; $\geq 1,96$; $\geq 2,80$ or $\geq 3,09$, preferably the warning limit threshold value is 1,96 and the control limit threshold value is 3,09.

According to another aspect of the present invention, a method is provided for the in vitro determination of SPFs provided by sunscreen products, wherein UV transparent substrate plates are used that have been tested by a method of the invention to control quality of UV transparent substrate plates and have been designated as "pass".

Suitable methods for in vitro detection of UVA protection provided by sunscreen products are known to the person skilled in the art and published as DIN 67502 and as COLIPA guideline "Method for the in vitro determination of UVA protection provided by sunscreen products", Version 2007.

Briefly, it is the aim of the proposed protocols to provide an *in vitro* test to measure UVA protection provided by sun care preparations. The methods provide *in vitro* UVA protection factors (UVAPF), which are shown to correlate well with *in vivo* UVA protection factors determined by the (*in vivo*) PPD method, the latter being considered as a reference. The tests are based on the assessment of UV-transmittance through a thin film of sunscreen sample spread on a UV transparent substrate plate qualified by a method of the present invention, before and after exposure to a controlled dose of UV radiation from a defined UV source. Due to the current lack of inter-laboratory reproducibility of absolute *in vitro* UV protection factor measurements, each set of sunscreen transmission data is adjusted by first converting to absorbance data (before and after UV exposure) and then by multiplying by the same coefficient. The coefficient is iteratively determined from the non-exposed sample's absorbance data to provide a calculated *in vitro* SPF value equal to the labelled (*in vivo*) SPF.

The sunscreen sample is exposed to an irradiation dose proportional to the initial UVA protection factor UVAPF$_0$, calculated from the adjusted absorbance data of the non exposed sample.

The final *in vitro* UVA protection factor (UVAPF) is calculated from the adjusted absorbance data of the UV exposed sample.

In another aspect, the present invention is directed to the use of UV transparent substrate plates that have been tested by a method of the invention and have been designated as "pass" in a method for the in vitro determination of UVA protection provided by sunscreen products.

The invention is also directed to the use of a method of the present invention for the provision of UV transparent substrate plates suitable for in vitro determination of UVA protection provided by sunscreen products, preferably for control of batch-to-batch variations and/or release of substrate plates or batches for sale.

For the methods and uses specified above, it is sufficient that the quality of a batch of UV transparent substrate plates has been tested by a method of the present invention. It is not necessary that each and every single substrate plate to be used has been tested individually.

FIGURES:

FIG. 1     shows covariance in % of determined SPFs for various batches of sandblasted (closed bars) and moulded (open bars) UV transparent substrate plates.

FIG. 2     shows the mean determined value for the surface parameter Ssc for 16 consecutive batches of moulded plates; all determined values are within the area determined by the target value +/- standard deviation (sigma).

EXAMPLES:

EXPERIMENTAL DETAILS

ROUGHNESS MEASUREMENTS OF SUBSTRATE:

The following conditions were applied to measure plate roughness: surface area 10mm x 5mm, interval measurement 15μm and scanning speed 100 steps/s. Non-contact surface topographic analysis was conducted by using an "Altisurf 500" Labworkstation from Altimet™, France. The System is composed of an optical sensor, a motion controller, an x-y translation stage and a microtopography software Mountain Altimap module. The confocal optical sensor is based on a white light chromatic aberration principle which allows a high resolution: 10 nm vertical and 1 μm horizontal.

Selection of surface topography parameters to measure surface roughness:

These parameters are calculated thanks to surface analysis (3D parameters: Sa, Sv, Sdq ...) or thanks to profile analysis (2D parameters: Ra, Rv, Rdq ...). The calculations are different, but both parameter types are calculated from the same x-y scan. Moreover, they have the same general meaning, each describing a same micro topographic aspect. The arithmetic average Sa was first selected, according to its large use in surface characterisation - see e.g. Colipa guideline-. Sa values are always given in micrometers (μm).
The roughness parameters we have selected are the following: Sa/Ra, Sp/Rp, Sv/Rv, Sdq/Rdq, Ssk/Rsk, Sku/Rku, SA1/A1, SA2/A2, Ssc and Vvv.
We preferably used new moulded plates. These new HD6 PMMA substrate plate measuring 47 x 47 x 1.5 mm, were supplied as "Helioplates HD6" by the company Helioscreen, Creil, France. HD6 plates respect the COLIPA guideline specifications, based on the percentage of transmission at 290, 300 and 320 nm (table 1).

Table 1: percentage of transmission at 290, 300 and 320 nm as provided by COLIPA recommendation.

| Wavelength range (nm) | Minimum transmission |
|---|---|
| 290 | 60 |
| 300 | 69 |
| 320 | 81 |

The method of *in vitro* determination of the protection UVA proposed by Colipa (Method for in vitro Determination of UVA protection, (2007) (colipa website)) or DIN 67502 only characterizes the support by the basic roughness parameter, the arithmetic average of the Sa.

OPERATING CONDITIONS FOR IN VITRO SPECTROSCOPY

A Labsphere® UV-1 000 S Transmittance analyser was used.
PMMA plates covered with a film of solvent (glycerol or petrolatum) was used to obtain the blank transmittance (from 290 to 400 nm, each nm).

Application rate

Preliminary studies showed that an application rate of 1.2 mg cm$^{-2}$ is most suitable for the sandblasted PMMA plates (Sa = 6 μm).
Concerning the moulded plates, a large number of essays reveals that the application rate had to be increased to 1.3 mg cm$^{-2}$ to be optimal.
These optimal amount of sunscreen product, (depending of the plate roughness) was distributed evenly over the whole roughened PMMA surface of the plate. To ensure the correct application rate, the pipette was weighted before and after using the product. Immediately after weighting, the sunscreen product was spread over the whole surface using light strokes. Spreading had to be completed as quickly as possible (less than 30 seconds). The sample thus obtained was allowed to settle for 15 minutes in the dark at room temperature to ensure a self-levelling of the formula. A total of 9 UV transmission spectra (from 290 to 400 nm, 1 nm increment step) were recorded on each plate at a different location. Three different plates were used for each roughness class, to give an average of the UV transmission data at each wavelength.

Product A

This product is an oil in water (O/W) based on behenic emulsifier. The filters incorporated are:

Ethylhexylmethoxycinnamate, Ethylhexyl Triazone, Ethylhexyl Salicilate, BEMT, and MBBT.

Composition of product A:

| | |
|---|---|
| WATER | 44,78 |
| DISODIUM EDTA | 0,1 |
| CAFFEINE | 0,5 |
| XANTHAN GUM | 0,2 |
| MAGNESIUM ALUMINUM SILICATE | 0,2 |
| CARBOMER | 0,05 |
| WATER | 2 |
| SODIUM HYDROXIDE | 0,02 |
| GLYCERIN | 2 |
| BHT | 6 |
| ETHYLHEXYL TRIAZONE | 2 |
| ETHYLHEXYL SALICYLATE | 4 |
| BUTYL METHOXYDIBENZOYLMETHANE | 3 |
| BEMT | 3 |
| CHLORPHENESIN | 0,3 |
| METHYLPARABEN | 0,3 |
| DIISOPROPYL SEBACATE | 7 |
| ISOPROPYL PALMITATE | 2 |
| TRIBEHENIN PEG-20 ESTERS | 6 |
| CETYLALCOHOL | 0,5 |
| CYCLOPENTASILOXANE | 3 |
| CROSSPOLYMER | 3 |
| TALC | 2 |
| MBBT | 3 |
| ANTIOXYDANT COMPLEX | 0,3 |
| WATER | 3 |
| GLYCINE | 0,05 |
| FRAGRANCE | 0,8 |
| PHENOXYETHANOL | 0,9 |

RESULTS:

Currently, the method to determine the SPF of the solar products is usually carried out on a polymethylmetacrylate sandblasted support (PMMA) of high roughness (6μm), the Helioplates.
We first investigated the reproducibility of *in vitro* SPF on 6 μm PMMA sandblasted plates, by applying a same product (product A) on 2 different batches of Helioplates, respecting COLIPA guidelines:
As mentioned in the operating conditions, transparency of PMMA plate through the percentage of transmittance was checked. The roughness parameter Sa was measured on each PMMA batch using our broad field confocal sensor. PMMA plates were selected so as to having a Sa value = 6 $\pm$ 0,5μm
We thus measured the SPF of the product A on these plates, having roughness and % of transmittance criteria acceptable according to the COLIPA guideline, but coming from two different batches. As the plates were checked, we normally should obtain reproducible SPF values.
The first series of value coming from the first batch of sandblasted plates (standard batch) gives us a SPF of 33, in line with the awaited value.

The second series of value (obtained with the same protocol and operators) coming from the second batch of sandblasted plates (new batch) gives us a SPF of 49, not in line with the awaited value (see table 2).

Table 2: SPFs observed for plates that show transmittance and roughness criterion according to the COLIPA recommendations. According to this recommendation, the average optical transmission through the substrate treated with glycerin or ethanol must be as shows in table 1 (NR =20).

| SPF PRODUCT A | BATCH 1 | BATCH 2 |
|---|---|---|
| Plate 1 | 33,65 | 57,09 |
| Plate 2 | 30,45 | 43,27 |
| Plate 3 | 35,15 | 46,85 |
| SPF Mean | 33,0833333 | 49,07 |

The SPF mean is significantly different according to Student t test (a<0.05).

This table shows that even when acceptance criteria for the plates described previously, e.g. in COLIPA guideline, are followed, it is not sufficient to guaranty the reproducibility of the SPF value.

Despite the breadth of available roughness parameters, quality professionals continue to specify surface based solely on the value of Sa. There are several reasons for this tendency: average roughness is easy to measure; it is well-established and understood; literature and standards are available to explain its parameters; and, perhaps most importantly, historical data is based upon it.

We carried out a screening of a number of roughness parameters (3D parameters as well as 2D), with the aim of showing the insufficiency of the parameter Sa to characterize the micro topography of PMMA plates and explaining the variation of the SPF between the two batches.

A series of plates selected from a batch having given reproducible SPF values (standard) was compared with a new batch of equal variances (thanks to Student t-test).

On 20 roughness parameters studied, 10 present significant differences at the threshold of at least 1 % of risk (Table 3).

Table 3: comparison of the roughness parameters of the sandblasted PMMA plates

| t-Test | Mean - Std | Mean - new batch | Alpha Risk | |
|---|---|---|---|---|
| Sa | 6.3389 | 6.3278 | 0.9759 | |
| Sq | 8.5200 | 8.2333 | 0.5070 | |
| Sp | 65.1000 | 76.7444 | 0.4201 | |
| **Sv** | **75.0000** | **213.8890** | **<.0001** | *** |
| **St** | **139.9330** | **290.8890** | **<.0001** | *** |
| **Ssk** | **-1.3722** | **-0.6996** | **0.0011** | *** |
| Sku | 7.4711 | 8.4822 | 0.3682 | |
| **Sdr** | **9.2489** | **8.1411** | **0.0191** | ** |
| **Sa1** | **135.4330** | **170.2220** | **0.0861** | * |
| **Sa2** | **1401.5600** | **874.8900** | **<.0001** | *** |
| Vmp | 0.0002 | 0.0003 | 0.1744 | |
| **Vvv** | 0.0015 | 0.0013 | **<.O001** | *** |
| Ra | 4.7167 | 4.6567 | 0.7719 | |
| Rq | 5.9900 | 5.8244 | 0.4811 | |
| Rp | 10.6811 | 10.9633 | 0.5660 | |
| **Rv** | **15.1889** | **13.7778** | **0.0021** | *** |
| **Rdq** | **12.9222** | **12.0667** | **0.0149** | ** |
| **Rsk** | **-0.9032** | **-0.5584** | **0.0024** | *** |

(continued)

| t-Test | Mean - Std | Mean - new batch | Alpha Risk | |
|--------|-----------|------------------|-----------|---|
| Rku | 5.7044 | 6.0067 | 0.5982 | |
| SSC | 0.0324 | 0.03231667 | 0.9639 | |
| (* significant at 10%, ** at 5%, *** at 1 %) | | | | |

These roughness variations observed between the two batches, confirmed also on 3 other batches, show that the parameters chosen by COLIPA are not sufficiently precise to be able to obtain reproducible SPF values and be in line with the corresponding *in vivo* SPF values. A selection or all of the 10 parameters, determined above to be significantly different, allow a precise characterization of the support roughness.

Taking in account that 3D roughness parameters are known to be sensitive to experimental conditions (due to filtering needs), normalized 2D parameters will be preferred.

The optimal parameters set for this study is the following:

Ra:  COLIPA recommendation
Rp:  preferred over Sp
Rv:  preferred over Sv
Rdq:  Root Mean Square Gradient
Rsk:  preferred over Ssk
Rku:  associated with Rsk to be in accordance with Abott Firestone curve.
Vvv:  volume of void in the valleys
A1:  to replace SA1
A2:  to replace SA2
Ssc:  Mean Summit Curvature

In order to follow the quality of the different batches of PMMA, control Charts have been designed according to the previous results. The design of these control Charts is, on one hand, Mean-chart based on, at least 5 plates mean for checking plates conformity and, on the other hand, Range-chart based for checking the batch homogeneity according benchmark previously defined.

This statistical follow up of roughness on several batches revealed a huge heterogeneity of sandblasted plates as shown below in table 5 representing % of the coefficient of variation of the different roughness parameters for the sandblasted plates (see Table 4).

Table 4: % of the coefficient of variation of the different roughness parameters for the sandblasted plates

| Sanded | Ra | Rp | Rv | Rdq | Rsk | Rku | A1 | A2 | Ssc | Vvv |
|--------|-----|-----|------|------|------|------|------|------|------|------|
| CV% | **55,9** | **59,3** | 41,87 | **54,22** | 165,7 | 70,69 | 84,74 | **56,78** | 44,11 | 41,17 |

Studies performed on internal programs show how the use of the roughness profiles impacts the UV indices determination, significantly decreasing the coefficient of variation on all results.

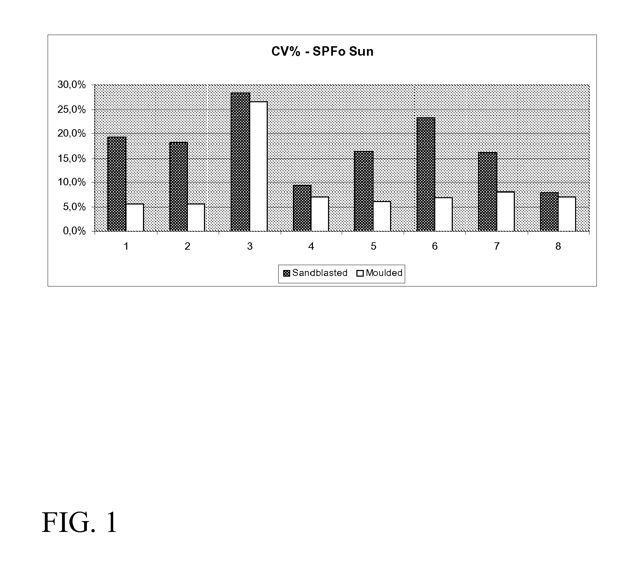

As an example, *in vitro* SPF, both evaluated on sandblasted and moulded plates, using strictly the same deposit protocol on several plates allows to conclude on the beneficial effect of roughness homogeneity on dependent results variance. The results are shown in FIG. 1. The *in vitro* SPF determination of each product was performed on 3 plates for both type of plates ( sandblasted and moulded plates) . The covariance obtained between the 3 plates is reported in Fig.1. It is noted that covariance is much higher in case of sandblasted plates compared to moulded plates. To conclude, moulded plates offers a better homogeneity inter plates.

Control Charts have been refined using a set of Target, Warning Limit threshold value (selected to include 95 % of means according Normal distribution hypothesis) and Control Limit threshold value (selected to include around 99.8 % of means according Normal distribution hypothesis) in accordance with the stability of moulded plates (see Table 5).

Target is based on the mean of validated batches for each criterion. A standard Sigma value is, as well, calculated on this set of batches. Lower warning limit (LWL) and upper warning limit (UWL) are computed using the $z_{0.975}$ value = 1.96 (warning limit = Target $\pm$1.96 Sigma). Control limit threshold values (upper control limit UCL and lower control limit LCL) are computed using the $Z_{0.999}$ value = 3.09 (UCL/LCL = Target $\pm$3.09 Sigma)

According to the Western electric rules, test for special causes, if:

- Two out of three points in a row beyond warning limit launch an alarm. Supplier must control his process control.
- One roughness parameter beyond control limit test is considered as a major problem and batch must be refused.

Table 5: control charts of the moulded PMMA plates HD6

|  | Ra | Rp | Rv | Rdq | Rsk | Rku | A1 | A2 | Ssc | Vvv |
|---|---|---|---|---|---|---|---|---|---|---|
| Target | 4,854 | 11,518 | 13,039 | 11,124 | -0,155 | 3,794 | 240,473 | 524,174 | 0,033 | 1,05E-06 |
| sigma | 0,200 | 0,666 | 0,441 | 0,798 | 0,071 | 0,365 | 33,060 | 29,645 | 0,018 | 8,73E-07 |

Table 5 indicates the target value ( determined according previous accepted batches) for each given parameter and its associated sigma.

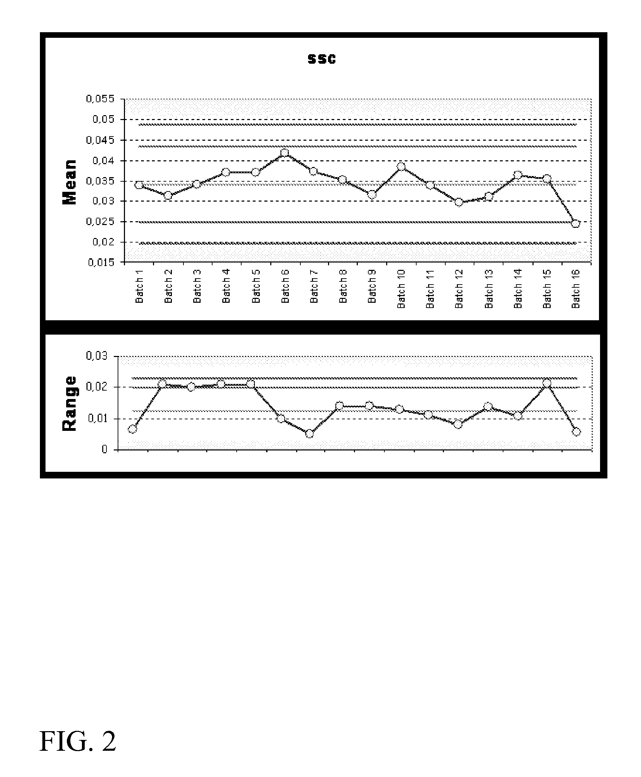

As example, see FIG. 2 for SSC Control Chart on 16 consecutive batches of moulded plates.

To take in account the information indicating the contribution of the whole set of roughness parameters to the plate quality, it has been decided to include a global indicator based on the z-score approach (*) allowing to validate each plate batch, the global z-score.

(*) z-score: any individual parameter value is transformed in its distance from the benchmark value (target) expressed in number of standard deviation,

global z-score: all individual z-score are aggregated in a global z-score.

All z-scores and the global z-score are compared to acceptable (95% or 99.7%) confidence interval values, the warning limit threshold value was selected to be 1,96 and the control limit threshold value was selected to be 3,09. A plate is refused to be designated as "pass" if i) at least one of the individual z-scores or the global z-score exceeds the control limit threshold value, ii) 2/3rd or more of the individual z-scores or the global z-score exceed the warning limit threshold value.

| Ra | Rp | Rv | Rdq | Rsk | Rku | A1 | A2 | Ssc | Vvv |
|---|---|---|---|---|---|---|---|---|---|
| 4,577 | 10,459 | 12,747 | 10,153 | -0,267 | 3,570 | 195,170 | 554,834 | 0,023 | 9,79E-07 |
| 4,521 | 10,226 | 12,692 | 10,239 | -0,297 | 3,633 | 192,757 | 576,552 | 0,032 | 9,86E-07 |
| 4,767 | 11,212 | 12,826 | 10,400 | -0,192 | 3,404 | 203,828 | 519,742 | 0,015 | 1,02E-06 |
| 4,567 | 10,615 | 12,440 | 10,141 | -0,197 | 3,558 | 212,785 | 505,021 | 0,022 | 9,49E-07 |
| 4,477 | 10,398 | 12,347 | 10,008 | -0,223 | 3,637 | 211,093 | 528,547 | 0,027 | 9,36E-07 |
| 4,503 | 10,277 | 12,473 | 10,019 | -0,265 | 3,577 | 192,035 | 532,073 | 0,030 | 9,29E-07 |
| 4,534 | 10,703 | 12,354 | 10,630 | -0,192 | 3,589 | 222,021 | 520,447 | 0,028 | 9,19E-07 |
| 4,540 | 10,377 | 12,540 | 9,760 | -0,262 | 3,631 | 198,054 | 543,696 | 0,029 | 9,67E-07 |
| 4,737 | 11,001 | 12,733 | 10,924 | -0,201 | 3,563 | 215,979 | 524,217 | 0,034 | 9,35E-07 |
| 4,521 | 10,591 | 12,332 | 9,588 | -0,191 | 3,867 | 228,165 | 544,718 | 0,025 | 9,3E-07 |
| 4,658 | 11,028 | 12,420 | 10,495 | -0,147 | 3,577 | 229,455 | 496,528 | 0,025 | 9,19E-07 |

Table 6 reports the observed values on roughness criteria for one batch.

Table 7 shows the set of Target and Standard Sigma evaluated on validated batches

| Target | 4,854 | 11,518 | 13,039 | 11,124 | -0,155 | ,794 | 240,473 | 524,174 | 0,033 | 1.05E-06 |
|---|---|---|---|---|---|---|---|---|---|---|
| sigma | 0,200 | 0,666 | 0,441 | 0,798 | 0,071 | 0,365 | 33,060 | 29,645 | 0,018 | 8,73E-07 |

| Ra | Rp | Rv | Rdq | Rsk | Rku | A1 | A2 | Ssc | Vw | Global |
|---|---|---|---|---|---|---|---|---|---|---|
| 1,38 | 1,59 | 0,66 | 1,22 | 1,58 | 0,61 | 1,37 | 1,03 | 0,56 | 0,08 | 1,12 |
| 1,66 | 1,94 | 0,79 | 1,11 | 2,00 | 0,44 | 1,44 | 1,77 | 0,005 | 0,07 | 1,33 |
| 0,43 | 0,46 | 0,48 | 0,91 | 0,52 | 1,07 | 1,11 | 0,15 | 1,01 | 0,03 | 0,72 |
| 1,43 | 1,36 | 1,36 | 1,23 | 0,60 | 0,65 | 0,84 | 0,65 | 0,61 | 0,11 | 0,98 |
| 1,88 | 1,68 | 1,57 | 1,40 | 0,96 | 0,43 | 0,89 | 0,15 | 0,33 | 0,13 | 1,13 |
| 1,75 | 1,86 | 1,28 | 1,38 | 1,55 | 0,60 | 1,47 | 0,27 | 0,16 | 0,14 | 1,23 |
| 1,60 | 1,22 | 1,55 | 0,62 | 0,52 | 0,56 | 0,56 | 0,13 | 0,27 | 0,15 | 0,89 |
| 1,57 | 1,71 | 1,13 | 1,71 | 1,51 | 0,45 | 1,28 | 0,66 | 0,22 | 0,09 | 1,19 |
| 0,58 | 0,78 | 0,69 | 0,25 | 0,65 | 0,63 | 0,74 | 0,00 | 0,07 | 0,13 | 0,54 |
| 1,66 | 1,39 | 1,60 | 1,92 | 0,51 | 0,20 | 0,37 | 0,69 | 0,44 | 0,13 | 1,10 |
| 0,98 | 0,74 | 1,40 | 0,79 | 0,11 | 0,60 | 0,33 | 0,93 | 0,44 | 0,15 | 0,75 |

Table 8 shows the individual and global z-scores for various plates of the batch.

| Ra | Rp | Rv | Rdq | Rsk | Rku | A1 | A2 | Ssc | Vvv | Global |
|---|---|---|---|---|---|---|---|---|---|---|
| OK | OK | OK | OK | OK | OK | OK | OK | OK | OK | OK |
| OK | OK | OK | OK | Pb | OK | OK | OK | OK | OK | OK |
| OK | OK | OK | OK | OK | OK | OK | OK | OK | OK | OK |
| OK | OK | OK | OK | OK | OK | OK | OK | OK | OK | OK |
| OK | OK | OK | OK | OK | OK | OK | OK | OK | OK | OK |
| OK | OK | OK | OK | OK | OK | OK | OK | OK | OK | OK |
| OK | OK | OK | OK | OK | OK | OK | OK | OK | OK | OK |
| OK | OK | OK | OK | OK | OK | OK | OK | OK | OK | OK |
| OK | OK | OK | OK | OK | OK | OK | OK | OK | OK | OK |
| OK | OK | OK | OK | OK | OK | OK | OK | OK | OK | OK |
| OK | OK | OK | OK | OK | OK | OK | OK | OK | OK | OK |

Table 9 shows the conclusion established according the individual z-score and global z-scores for said plates of the batch (Pb= individual or global Z-score exceeds the warning limit).

The batch as well as plate 1 are designated as "pass" according to the method of the invention.

## Claims

1. Method to control quality of UV transparent substrate plates, comprising the steps:

a) providing UV transparent substrate plate;

b) determining surface parameters for at least one roughened main surface of the UV transparent substrate plate, wherein the surface parameters determined comprise at least three surface parameters selected from Sv, Rv, St, Rt, Sdr, Rdr, Sdq, Rdq, Ssk, Rsk, SA1, A1, SA2, A2 and Vvv;

c) use of determined values to generate one or more comparative values;

d) determine compliance of one or more comparative values with a threshold value; and
e) if a predetermined number of comparative values does not exceed a corresponding threshold value, the UV transparent substrate plate is designated as "pass".

2. Method of claim 1, wherein one or more further surface parameter are determined in addition, said further surface parameters being selected from Sa, Ra, Sp, Rp, Sku, Rku, Sq, Rq, Vmp and/or Ssc .

3. Method of anyone of the preceding claims, wherein the surface parameters Ra, Rp, Rv, Rdq, Rsk, Rku, A1, A2, Ssc and Vvv are determined.

4. Method of anyone of the preceding claims, wherein each determined value is used to generate a corresponding comparative value, one or more groups of determined values are used to generate a common corresponding comparative value and/or all determined values are used to generate one single corresponding comparative value.

5. Method of anyone of the preceding claims, wherein one or more comparative values are z-scores and/or averages of z-scores of the corresponding determined values.

6. Method of anyone of the preceding claims, wherein at least one comparative value is a global z-score, wherein each determined value is used to generate a corresponding z-score and all corresponding z-scores are used to generate a global z-score.

7. Method of anyone of the preceding claims, wherein the determined values are used to generate corresponding single z-scores and a global z-score of all single z-scores; the compliance of single z-scores and/or the global z-score with a threshold value is determined; and if the global z-score and/or a predetermined number of single z-scores does not exceed a corresponding threshold value, the UV transparent substrate plate is designated as "pass".

8. Method of anyone of the preceding claims, wherein compliance of a comparative value is determined with respect to more than one threshold value, preferably two threshold values, wherein a first threshold value is lower than a second threshold value.

9. Method of anyone of the preceding claims, wherein at least one threshold value is selected to be $\geq 1,3$; $\geq 1,65$; $\geq 1,96$; $\geq 2,80$ or $\geq 3,09$.

10. Method of anyone of the claims 1 to 6 and 8 to 9, wherein determined values are used to generate corresponding single z-scores and/or a global z-score of all single z-scores; compliance of single z-scores and/or the global z-score with two threshold values, a warning limit threshold value and a control limit threshold value, is determined; and:

    i) if the global z-score and/or a predetermined number of the single z-scores do not exceed the warning limit threshold value, the UV transparent substrate plate is designated as "pass";
    ii) if the global z-score and/or at least one of the single z-scores exceeds the control limit threshold value, the UV transparent substrate plate is no longer designated as "pass"; and
    iii) if one or more than a predetermined number of the single z-scores exceed the warning limit threshold value, an alarm is launched in order to allow for control of manufacturing process of UV transparent substrate plate.

11. Method of claim 10, wherein the warning limit threshold value is lower than the control limit threshold value and wherein both, the warning limit threshold value and the control limit threshold value, are independently selected to be $\geq 1,65$; $\geq 1,96$; $\geq 2,80$ or $\geq 3,09$, preferably the warning limit threshold value is 1,96 and the control limit threshold value is 3,09.

12. Method of anyone of the preceding claims, wherein the predetermined number does not exceed the number of comparative values and/or is selected to be 1, 2, 3, 4, 5, 6, 7, 8, 9,10, 11 or 12, preferably the predetermined number is selected to be not less than 1/3$^{rd}$ of the total number of comparative values.

13. Method for the in vitro determination of UVA protection provided by sunscreen products, wherein UV transparent substrate plates are used that have been tested by a method according to anyone of claims 1 to 12 and have been designated as "pass".

14. Use of UV transparent substrate plates that have been tested by a method according to anyone of claims 1 to 12 and have been designated as "pass" in a method for the in vitro determination of sun protection factor provided by sunscreen products.

15. Use of a method according to anyone of claims 1 to 12 for the provision of UV transparent substrate plates suitable for in vitro determination of sun protection factor provided by sunscreen products.

FIG. 1

FIG. 2

European Patent Office

Europäisches Patentamt

European Patent Office

Office européen des brevets

## EUROPEAN SEARCH REPORT

**Application Number**

EP 09 15 8660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FERRERO L ET AL: "Importance of substrate roughness for in vitro sun protection assessment" IFSCC MAGAZINE, ALLURED PUB., CAROL STREAM, IL, US, vol. 9, no. 2, 1 January 2006 (2006-01-01), pages 97-108, XP009123570 ISSN: 1520-4561 * abstract * * page 98 - page 107 * | 1-15 | INV. G01B11/30 G01N21/896 |
| Y | STOUT ET AL: "Surface roughness˜ - Measurement, interpretation and significance of data" MATERIALS AND DESIGN, LONDON, GB, vol. 2, no. 6, 1 December 1981 (1981-12-01), pages 287-295, XP024153331 ISSN: 0261-3069 [retrieved on 1981-12-01] * page 290 - page 293 * | 1-15 | |
| Y | GERS-BARLAG H ET AL: "In vitro testing to assess the UVA protection performance of sun care products" INTERNATIONAL JOURNAL OF COSMETIC SCIENCE, KLUWER ACADEMIC PUBLISHERS, DORDRECHT, NL, vol. 23, no. 1, 1 March 2001 (2001-03-01), pages 3-14, XP002240378 ISSN: 0142-5463 * abstract * * page 6 - page 8 * | 1-15 | TECHNICAL FIELDS SEARCHED (IPC) G01B G01N |

-/--

The present search report has been drawn up for all claims

| Place of search | Date of completion of the search | Examiner |
|---|---|---|
| Munich | 5 October 2009 | Kokkonen, Jukka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 15 8660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | E.S. GADELMAWLA, M.M. KOURA, T.M.A. MAKSOUD, I.M. ELEWA, H.H. SOLIMAN: "Roughness parameters" JOURNAL OF MATERIALS PROCESSING TECHNOLOGY, vol. 123, 8 February 2002 (2002-02-08), pages 133-145, XP002548535 * abstract * * page 133 - page 139 * | 1-15 | |

TECHNICAL FIELDS
SEARCHED     (IPC)

The present search report has been drawn up for all claims

| Place of search | Date of completion of the search | Examiner |
|---|---|---|
| Munich | 5 October 2009 | Kokkonen, Jukka |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                 
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Kelley K. ; Laskar P.** *J. Soc. Chem.,* 1993
- **Dutra E. ; Oliviera D.** *RBCF,* 2004
- **Bendova H. ; Alcrman J.** *Toxicology in vitro,* 2007
- **Pissavini M. ; Alard V.** *Cosm. & Toil.,* 2003
- **U. Heinrich ; D, Kockott.** *R. Int. J. Cosmet. Sei.,* 2004
- **Ferrero L ; Pissavini M ; Dehais A ; Zastrow L.** Importance of Substrate Roughness for In Vitro Sun Protection assessment. *IFSCC magazine,* 2006, vol. 9 (2